# EUROPÄISCHE PATENTSCHRIFT

(11) **EP 2 442 112 B1**
(45) Veröffentlichungstag und Bekanntmachung des Hinweises auf die Patenterteilung: **14.10.2015**
(21) Anmeldenummer: 11006807.9
(22) Anmeldetag: 20.08.2011
(51) Int. Cl.: G01P 1/12, G07C 5/08, B60W 40/09

(54) **Verfahren und Vorrichtung zur Bewertung der Fahrweise eines Fahrzeugführers von Kraftfahrzeugen, insbesondere Nutzfahrzeugen**
Method and device for evaluating the driving of a driver of motor vehicles, in particular commercial vehicles
Procédé et dispositif d'évaluation de la conduite d'un conducteur de véhicules automobiles, notamment des véhicules utilitaires

(30) Priorität: 13.10.2010 DE 102010048324
(43) Veröffentlichungstag der Anmeldung: 18.04.2012
(73) Patentinhaber: MAN Truck & Bus AG, 80995 München (DE)
(72) Erfinder: Dörner, Karlheinz, 85757 Karlsfeld (DE); Zimmermann, Andreas, 80995 München (DE); Heyes, Daniel, 81247 München (DE); Huber, Martin, 81243 München (DE); Drimml, Peter, 85221 Dachau (DE); Michel, Britta, 81675 München (DE)

(56) Entgegenhaltungen:
- WO-A1-2009/104255
- DE-A1-102007 036 589
- DE-A1-102008 040 284
- DE-A1-102008 055 656
- DE-C1- 19 860 248
- Bosch: "Fahrtschreiber" In: "Kraftfahrtechnisches Taschenbuch", 1. Oktober 2003 (2003-10-01), Vieweg+Teubner Verlag, Wiesbaden, XP055096954, ISBN: 978-3-66-301406-5 Seiten 1083-1085, * Seite 1085, rechte Spalte *

## Beschreibung

Die Erfindung betrifft ein Verfahren zur Bewertung der Fahrweise eines Fahrzeugführers von Kraftfahrzeugen, insbesondere von Nutzfahrzeugen, nach dem Oberbegriff des Anspruchs 1. Ferner betrifft die Erfindung eine Vorrichtung zur Bewertung der Fahrweise eines Fahrzeugführers von Kraftfahrzeugen, insbesondere von Nutzfahrzeugen, nach dem Oberbegriff des Anspruchs 7.

Verfahren zur Bewertung des Fahrstils bzw. der Fahrweise von Fahrern sind allgemein bekannt. So zum Beispiel aus der DE 10 2008 041 618 A1, bei der die Fahrweise des Fahrers eines Kraftfahrzeuges in Bezug auf die Kraftstoffnutzung beurteilt wird. Hierzu wird ein erstes Signal ermittelt, auf dessen Basis durch Tiefpassfilterung ein zweites Signal ermittelt wird. Anschließend wird durch das Auswerten der Differenz beider Signale eine Bewertung der Fahrweise in Bezug auf die Kraftstoffnutzung vorgenommen.

Aus der DE 10 2008 055 656 A1 ist ein Verfahren nach dem Oberbegriff des Anspruchs 1 sowie eine Vorrichtung nach dem Oberbegriff des Anspruchs 7 bekannt, insbesondere offenbart DE 10 2008 055 656 A1 ein Messgerät zur Messung und Bewertung des Fahrstils von Fahrern, bei dem insbesondere das Bremsverhalten ausgewertet wird, und zwar auf der Basis eines positiven oder negativen Beschleunigungsverhaltens. Das Messgerät kann zum Beispiel mit einem Fahrtenschreiber kombiniert sein.

Aus der DE 10 2005 025 271 A1 ist ein Bewertungsverfahren zur Bewertung mehrerer Fahrer und Fahrzeuge eines Fahrzeugkollektivs bekannt.

Aus der DE 10 2008 040 284 A1 ist es weiter bekannt, aus fahrerabhängig gespeicherten Daten eine persönliche Fahrweise des jeweiligen Fahrers in verschiedenen Fahrsituationen zu ermitteln. Hierzu werden zum Beispiel Daten eines Getriebesteuergerätes oder dergleichen Daten auf zum Beispiel einer Fahrerkarte eines Fahrers zwischengespeichert und dann auf einem Zentralcomputer ausgewertet werden. Durch diese Auswertung ist es dann möglich den Fahrstil des Fahrers zu bestimmen und den Fahrer zu schulen bzw. auf ein bestimmtes Fehlverhalten hinzuweisen. Um die so jeweils für einen Fahrer ermittelte Fahrweise an eine vorbestimmte Wunschfahrweise anzupassen, kann zum Beispiel ein Fuhrparkunternehmer dieses Wunschverhalten auf einem Speichermedium wie zum Beispiel der Fahrerkarte hinterlegen, so dass diese Daten dann beim Einführen der Fahrerkarte in das zugeord nete Gerät eingelesen werden können sowie an zum Beispiel die Getriebesteuerung oder die Motorsteuerung übermittelt werden können. Dadurch ist dann der persönliche Fahrstil bzw. die persönliche Fahrweise des Fahrers hinterlegt. Des Weiteren ist vorgesehen, dass die Fahrzustandsdaten mit einem Diagnose-PC-Tool oder dergleichen ausgelesen werden. Gemäß einer weiteren Ausgestaltung ist vorgesehen, dass die gespeicherten Daten durch ein Motorsteuergerät ausgewertet werden und dann über ein Fahrzeugnetzwerk auf eine Fahrerkarte oder eine Chipkarte des Fahrers übertragen werden. Bei einer derartige Verfahrensführung ergeben sich jedoch aufgrund der vielen Schnittstellen zwischen den einzelnen datenübertragenden Einheiten erhebliche Manipulationsmöglichkeiten, so dass eine derartige Verfahrensführung unpraktikabel ist.

Aufgabe der vorliegenden Erfindung ist es daher, ein Verfahren und eine Vorrichtung zur Bewertung der Fahrweise eines Fahrzeugführers von Kraftfahrzeugen, insbesondere von Nutzfahrzeugen, zur Verfügung zu stellen, mittels dem die Fahrstilbewertungen auf eine manipulationssichere Art und Weise durchgeführt werden können.

Diese Aufgabe wird gelöst mit den Merkmalen der unabhängigen Patentansprüche. Vorteilhafte Ausgestaltungen sind Gegenstand der darauf rückbezogenen Unteransprüche.

Gemäß Anspruch 1 wird ein Verfahren zur Bewertung der Fahrweise eines Fahrzeugführers von Kraftfahrzeugen, insbesondere von Nutzfahrzeugen, mit einer Erfassungs- und Auswerteeinrichtung vorgeschlagen, die eine Erfassungseinrichtung, mittels der wenigstens eine fahrweisenindikative Messgröße erfasst wird, und eine Auswerteeinrichtung aufweist, mittels der auf der Basis der wenigstens einen fahrweisenindikativen Messgröße wenigstens eine die Fahrweise und/oder die Qualifikation des jeweiligen Fahrers bewertende Fahrweisenkenngröße ermittelt wird. Die Erfassungs- und Auswerteeinrichtung ist in einen Tachographen integriert, wobei die Bewertung der Fahrweise auf der Basis eines definierten Bewertungsprogramms oder -musters vorgenommen wird. Erfindungsgemäß wird mittels des manipulationssicher ausgebildeten, insbesondere digitalen Tachographen die wenigstens eine fahrweisenindikative Messgröße manipulationssicher erfasst und aus der wenigstens einen fahrweisenindikativen Messgröße die wenigstens eine Fahrweisenkenngröße manipulationssicher ermittelt und/oder abgespeichert sowie als den Fahrer bewertende und/oder qualifizierende Fahrerqualifikationsmitteilung ausgegeben.

Weiter ist erfindungsgemäß eine Umwandlereinrichtung vorgesehen, mittels der auf der Basis der für einen ersten Fahrer mittels eines ersten Bewertungsprogramms oder -musters ermittelten wenigstens einen Fahrweisenkenngröße die dieser wenigstens einen Fahrweisenkenngröße zugrundeliegende, wenigstens eine fahrweisenindikative Messgröße ermittelt wird. Anschließend wird auf der Basis dieser so ermittelten wenigstens einen fahrweisenindikativen Messgröße mittels eines zweiten, zum ersten Bewertungsprogramm oder -muster unterschiedlichen Bewertungsprogramms oder -musters wenigstens eine Fahrweisenkenngröße ermittelt, die dann mittels des zweiten Bewertungsprogramms oder -musters ermittelten Fahrweisenkenngrößen bzw. Fahrerqualifikationsmitteilungen vergleichbar ist. Mit einer derartigen erfindungsgemäßen Lösung wird auf einfache Weise die Vergleichbarkeit der gegebenenfalls auf unterschiedlichen Bewertungsprogrammen oder Bewertungsmustern basierenden Fahrweisenkenngrößen bzw. Fahrerqualifikationsmitteilungen möglich. Dabei wird vorteilhaft ausgenutzt, dass den bereits bekannten unterschiedlichen Bewertungsprogrammen regelmäßig dieselben fahrweisenindikativen Messgrößen, wie beispielsweise eine Motordrehzahl und/oder Geschwindigkeits- und/oder Beschleunigungsdaten, um nur einige Beispiele zu nennen, zugeführt werden.

In diesem Zusammenhang ist es besonders vorteilhaft, wenn die Umwandlereinrichtung ebenfalls Bestandteil der in den Tachographen integrierten Erfassungs- und Auswerteeinrichtung ist oder wenn die Umwandlereinrichtung als separates Bauteil mit der Erfassungs- und Auswerteeinrichtung gekoppelt sowie ebenfalls in den Tachographen integriert ist, da dann in Verbindung mit dem Tachographen eine zentrale Einheit zur manipulationssicheren Erstellung einer Fahrerqualifikationsmitteilung zur Verfügung gestellt wird. Es versteht sich jedoch, dass die Umwandlereinrichtung selbstverständlich grundsätzlich auch ein separates Bauteil darstellen kann, in dem die entsprechende Umwandlung der manipulationssicher ausgegebenen Fahrerqualifikationsmitteilungen erfolgt.

Vorteilhaft können mit der erfindungsgemäßen Lehre durch die Integration der Erfassungs- und Auswerteeinrichtung in einen manipulationssicher ausgebildeten Tachographen die dortigen Vorkehrungen zur Verhinderung von Manipulationen in einer vorteilhaften Doppelfunktion auch dazu ausgenutzt werden, um eine manipulationssichere Bewertung des Fahrstils bzw. der Qualifikation des Fahrers vornehmen zu können, und, was ein wesentliches Merkmal der vorliegenden Erfindung darstellt, gleichzeitig auch eine Fahrerqualifikationsmitteilung manipulationssicher ausgeben zu können.

Der Tachograph kann hierzu vorzugsweise eine Ausgabeeinrichtung aufweisen, die mit der Erfassungs- und Auswerteeinrichtung gekoppelt ist oder Bestandteil derselben bildet und mittels der die Fahrerqualifikationsmitteilung in Form eines Fahrerqualifikationsbelegs ausgegeben wird. Eine derartige Ausgabeeinrichtung kann beispielsweise ein Drucker bzw. eine Druckeinheit des Tachographen sein, die regelmäßig ohnehin vorhanden ist.

Alternativ dazu kann der Tachograph aber auch eine Ausgabeeinrichtung aufweisen, mittels der die wenigstens eine den Fahrstil des Fahrers und/oder die Qualifikation des jeweiligen Fahrers bewertende Fahrweisenkenngröße auf einer mit dem Tachographen in Wirkverbindung bringbaren Speicherkarte abgespeichert wird, die dann die Fahrerqualifikationsmitteilung enthält und damit im weiteren Sinne bildet. Bei dieser Speicherkarte kann es sich um eine herkömmliche Fahrerkarte eines digitalen Tachographen handeln oder aber auch um eine separate Speicherkarte, die dann einen separaten Fahrerqualifikationsbeleg ausbildet.

Ein nochmals wesentlich erhöhter Manipulationsschutz kann dadurch erzielt werden, dass die wenigstens eine fahrweisenindikative Messgröße dem Tachographen kryptographisch bearbeitet zugeführt wird und diese wenigstens eine Messgröße im Tachographen mittels eines dort hinterlegten Codes oder Schlüssels entschlüsselt sowie dort auch abgespeichert und ausgewertet wird. Die Begrifflichkeit "Code" und "Schlüssel" ist hier ausdrücklich in einem weiten Sinne zu verstehen und soll ausdrücklich sämtliche kryptographischen Möglichkeiten zur manipulationssicheren Datenverarbeitung umfassen.

Besonders bevorzugt ist eine Ausgestaltung, bei der die wenigstens eine Fahrweisenkenngröße in Form eines Skalenwertes ausgegeben bzw. abgespeichert wird, der als die Fahrweise des jeweiligen Fahrers bewertender Skalenwert aus einer mehrere Skalenwerte aufweisenden Bewertungsskala ermittelt wird. Mit einem derartigen Skalenwert kann dann die Fahrerqualifikation auf der Fahrerqualifikationsmitteilung auf einfache und verständliche Weise wiedergegeben werden, zum Beispiel in der Art einer Schulnote oder dergleichen.

Gemäß einer weiteren besonders bevorzugte Ausgestaltung der vorliegenden Erfindungsidee ist vorgesehen, dass die Bewertung der Fahrweise für einen definierten Streckenabschnitt vorgenommen wird.

Die sich mit der Vorrichtung ergebenden Vorteile wurden bereits zuvor in Verbindung mit den Verfahrensansprüchen erläutert, so dass diesbezüglich auf die zuvor gemachten Ausführungen verwiesen wird.

Die Erfindung wird nachfolgend anhand einer Zeichnung näher erläutert.

Es zeigen:
- Fig. 1: schematisch einen erfindungsgemäßen Tachographen, in den eine erfindungsgemäße Erfassungs- und Auswerteeinrichtung zur manipulationssicheren Ausgabe einer den Fahrer bewertenden und/oder qualifizierenden Fahrerqualifikationsmitteilung integriert ist, und
- Fig. 2: schematisch eine Blockbild-Darstellung einer beispielhaften erfindungsgemä-βen Verfahrensführung.

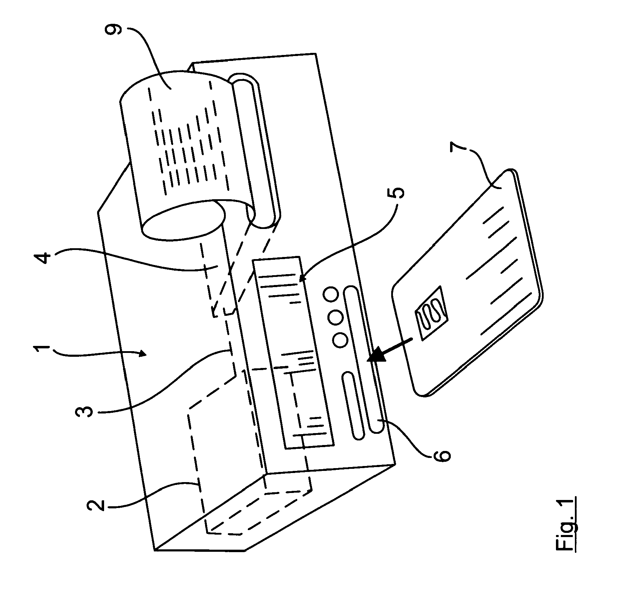

In der Fig. 1 ist schematisch und beispielhaft ein manipulationssicher ausgebildeter digitaler Tachograph 1 dargestellt, in den eine hier lediglich schematisch und strichliert dargestellte Erfassungs- und Auswerteeinrichtung 2 integriert ist, die über eine Datenleitung 3 mit einer hier durch eine Druckereinrichtung gebildeten Ausgabeeinrichtung 4 gekoppelt ist.

Neben dem üblichen Display 5, auf das hier nicht näher eingegangen wird, weist der Tachograph einen Bestandteil einer Ausgabeeinrichtung bildenden Einführschlitz 6 für eine durch eine Chipkarte 7 gebildete Fahrerkarte auf.

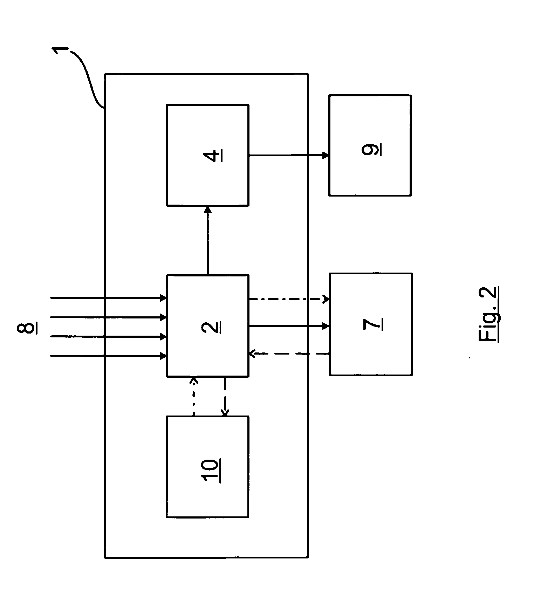

Wie dies nunmehr insbesondere aus der Fig. 2 ersichtlich ist, werden mittels des digitalen Tachographen 1, insbesondere mittels der darin integrierten Erfassungs- und Auswerteeinrichtung 2 die für die Bewertung der Fahrweise und/oder die Qualifizierung des Fahrers benötigten fahrweisenindikativen Messgrößen 8 erfasst und dort wenigstens eine die Fahrweise und/oder die Qualifikation des jeweiligen Fahrers bewertende Fahrweisenkenngröße ermittelt wird.

Die Messgrößen 8 werden dem Tachographen 1 bzw. der dort integrierten Erfassungs- und Auswerteeinrichtung 2 kryptographisch verschlüsselt zugeführt, um eine schnittstellenseitige zusätzliche Manipulationssicherheit zu schaffen. Im Bereich der Erfassungs- und Auswerteeinrichtung ist dann ein entsprechender Code oder Schlüssel hinterlegt, der die verschlüsselt übertragenen Messgrößen 8 zur Auswertung entschlüsselt.

Die so manipulationssicher ermittelte wenigstens eine Fahrweisenkenngröße wird dann im Tachographen 1 zum Beispiel der Druckereinrichtung 4 zugeführt, die, wie dies in der Fig. 1 lediglich äußerst schematisch dargestellt ist, dann ein Fahrerqualifikationsbeleg 9 als Fahrerqualifikationsmitteilung ausdruckt. Alternativ oder zusätzlich dazu kann die Ausgabe der Fahrerqualifikationsmitteilung aber auch dergestalt erfolgen, dass die manipulationssicher ermittelte Fahrweisenkenngröße auf der Fahrerkarte 7 abgespeichert wird.

Die wenigstens eine Fahrweisenkenngröße wird vorzugsweise in Form eines Skalenwertes ausgegeben oder abgespeichert, der als die Fahrweise des jeweiligen Fahrers bewertender Skalenwert aus einer mehrere Skalenwerte aufweisenden Bewertungsskala ermittelt wird. Diese Daten zur Bewertung bzw. die Bewertungsskala selbst sind zum Beispiel in der Erfassungs- und Auswerteeinrichtung 2 entsprechend in der Art eines Kennfeldes hinterlegt.

Wie dies aus der schematischen Darstellung der Fig. 2 weiter ersichtlich ist, ist in den Tachographen 1 ferner eine Umwandlereinrichtung 10 integriert, die zum Beispiel so mit der Erfassungs- und Auswerteeinrichtung 2 zusammenwirkt, dass diese, wie dies in der Fig. 2 strichliert dargestellt ist, von der Erfassungs- und Auswerteeinrichtung 2 eingelesene und mittels eines ersten Bewertungsprogramms erstellte Daten einer Fahrerqualifikationsmitteilung erhält, und zwar insbesondere in Form einer Fahrweisenkenngröße. In der Umwandlereinrichtung 10 werden dann die diesen so eingelesenen Daten zugrundeliegenden fahrweisenindikativen Messgrößen ermittelt und anschließend auf der Basis dieser so ermittelten fahrweisenindikativen Messgrößen mittels eines zweiten, zum ersten Bewertungsprogramm unterschiedlichen Bewertungsprogramms wenigstens eine Fahrweisenkenngröße ermittelt, die dann, wie dies in der Fig. 2 strichpunktiert dargestellt ist, über die Erfassungs- und Auswerteeinrichtung 2 wieder auf der Speicher- bzw. Fahrerkarte 7 abgespeichert wird. Diese wenigstens eine Fahrweisenkenngröße bzw. die so umgewandelte Fahrerqualifikationsmitteilung kann dann mit denjenigen Fahrweisenkenngrößen bzw. denjenigen Fahrerqualifikationsmitteilungen verglichen werden, die ebenfalls mittels des zweiten Bewertungsprogramms erstellt worden sind.

Es versteht sich, dass in Verbindung mit der Umwandlereinrichtung 10 selbstverständlich eine Umwandlung in Verbindung mit mehr als zwei Bewertungsprogrammen erfolgen kann.

So können zum Beispiel in der Umwandlereinrichtung mehrere Umwandlungsprogramme hinterlegt sein, die entsprechend unterschiedlichen Bewertungsprogrammen zugeordnet sind. Die Identifikation der jeweiligen Bewertungsprogramme kann dann zum Beispiel auf einfache Weise durch entsprechend indikative Daten oder Parameter erfolgen. Die hier gezeigte beispielhafte Darstellung soll lediglich das Grundprinzip der erfindungsgemäßen Umwandlereinrichtung verdeutlichen, die bevorzugt aufgrund der Manipulationssicherheit ebenfalls in den Tachographen 1 integriert ist, grundsätzlich aber auch durch ein eigenes Gerät gebildet sein kann.

Es versteht sich weiter, dass die Ausgabe der umgewandelten Fahrweisenkenngrößen bzw. der umgewandelten Fahrerqualifikationsmitteilung selbstverständlich auch über die Druckereinrichtung 4 als Ausgabeeinrichtung erfolgen kann.

## Patentansprüche

1. Verfahren zur Bewertung der Fahrweise eines Fahrzeugführers von Kraftfahrzeugen, insbesondere von Nutzfahrzeugen, mit einer Erfassungs- und Auswerteeinrichtung (2), die eine Erfassungseinrichtung, mittels der wenigstens eine fahrweisenindikative Messgröße erfasst wird, und eine Fahrweisen-Auswerteeinrichtung aufweist, mittels der auf der Basis der wenigstens einen fahrweisenindikativen Messgröße wenigstens eine die Fahrweise und/oder die Qualifikation des jeweiligen Fahrers bewertende Fahrweisenkenngröße ermittelt wird, wobei die Erfassungs- und Auswerteeinrichtung (2) in einen Tachographen (1) integriert ist, wobei die Bewertung der Fahrweise auf der Basis eines definierten Bewertungsprogramms oder -musters vorgenommen wird, **dadurch gekennzeichnet, dass** der Tachograph (1) manipulationssicher ausgebildet ist und mittels des manipulationssicher ausgebildeten Tachographen (1) die wenigstens eine fahrweisenindikative Messgröße (8) manipulationssicher erfasst wird und aus der wenigstens einen fahrweisenindikativen Messgröße (8) die wenigstens eine Fahrweisenkenngröße manipulationssicher ermittelt und/oder abgespeichert sowie als den Fahrer bewertende und/oder qualifizierende Fahrerqualifikationsmitteilung (7, 9) ausgegeben wird,
dass eine Umwandlereinrichtung (10) vorgesehen ist, mittels der auf der Basis der für einen ersten Fahrer mittels eines ersten Bewertungsprogramms oder -musters ermittelten wenigstens einen Fahrweisenkenngröße die dieser wenigstens einen Fahrweisenkenngröße zugrundeliegende wenigstens eine fahrweisenindikative Messgröße ermittelt wird, und
dass anschließend auf der Basis dieser so ermittelten wenigstens einen fahrweisenindikativen Messgröße mittels eines zweiten, zum ersten Bewertungsprogramm oder - muster unterschiedlichen Bewertungsprogramms oder -musters wenigstens eine Fahrweisenkenngröße ermittelt wird, die dann mit mittels des zweiten Bewertungsprogramms oder -musters ermittelten Fahrweisenkenngrößen vergleichbar ist.

2. Verfahren nach Anspruch 1, **dadurch gekennzeichnet, dass** der Tachograph (1) eine Ausgabeeinrichtung (4), insbesondere einen Drucker aufweist, mittels welcher Ausgabeeinrichtung (4) die Fahrerqualifikationsmitteilung (9) in Form eines Fahrerqualifikationsbelegs ausgegeben wird.

3. Verfahren nach Anspruch 2, **dadurch gekennzeichnet, dass** der Tachograph (1) eine Ausgabeeinrichtung (6) aufweist, mittels der die wenigstens eine Fahrweisenkenngröße auf einer mit dem Tachographen (1) in Wirkverbindung bringbaren Speicherkarte (7) abgespeichert wird, die dann die Fahrerqualifikationsmitteilung ausbildet.

4. Verfahren nach einem der vorhergehenden Ansprüche, **dadurch gekennzeichnet, dass** die wenigstens eine fahrweisenindikative Messgröße (8) dem Tachographen (1) kryptographisch bearbeitet zugeführt wird und diese Messgröße (8) im Tachographen (1) mittels eines dort hinterlegten Codes oder Schlüssels entschlüsselt sowie dort abgespeichert und ausgewertet wird.

5. Verfahren nach einem der vorhergehenden Ansprüche, **dadurch gekennzeichnet, dass** die wenigstens eine Fahrweisenkenngröße in Form eines Skalenwertes ausgegeben und/oder abgespeichert wird, der als die Fahrweise des jeweiligen Fahrers bewertender Skalenwert aus einer mehrere Skalenwerte aufweisenden Bewertungsskala ermittelt wird.

6. Verfahren nach einem der vorhergehenden Ansprüche, **dadurch gekennzeichnet, dass** die Bewertung der Fahrweise für einen definierten Streckenabschnitt vorgenommen wird.

7. Vorrichtung zur Durchführung einer Bewertung der Fahrweise eines Fahrzeugführers von Kraftfahrzeugen, mit einer Erfassungs- und Auswerteeinrichtung (2), die eine Erfassungseinrichtung zur Erfassung wenigstens einer fahrweisenindikativen Messgröße und eine Fahrweisen-Auswerteeinrichtung zur Ermittlung wenigstens einer die Fahrweise und/oder die Qualifikation eines Fahrers bewertenden Fahrweisenkenngröße auf der Basis der wenigstens einen fahrweisenindikativen Messgröße aufweist, wobei die Erfassungs- und Auswerteeinrichtung (2) in einen Tachographen (1) integriert ist, **dadurch gekennzeichnet, dass** der Tachograph (1) manipulationssicher ausgebildet ist dergestalt, dass mittels des Tachographen (1) die wenigstens eine fahrweisenindikative Messgröße (8) manipulationssicher erfassbar ist und aus der wenigstens einen fahrweisenindikativen Messgröße (8) die wenigstens eine Fahrweisenkenngröße manipulationssicher ermittelbar und/oder abspeicherbar ist,
dass der Tachograph (1) eine Ausgabeeinrichtung (4, 6) aufweist, mittels der eine Fahrerqualifikationsmitteilung in Form eines Fahrerqualifikationsbelegs (9) ausgebbar ist und/oder mittels der die wenigstens eine Fahrweisenkenngröße auf einem mit dem Tachographen (1) in Wirkverbindung bringbaren, eine Fahrerqualifikationsmitteilung ausbildenden Speichermedium oder einer Speicherkarte (7) abspeicherbar ist,
dass eine Umwandlereinrichtung (10) vorgesehen ist, mittels der auf der Basis der für einen ersten Fahrer mittels eines ersten Bewertungsprogramms oder -musters ermittelten wenigstens einen Fahrweisenkenngröße die dieser wenigstens einen Fahrweisenkenngröße zugrundeliegende wenigstens eine fahrweisenindikative Messgröße ermittelt wird, und mittels welcher Umwandlereinrichtung (10) anschließend auf der Basis dieser so ermittelten wenigstens einen fahrweisenindikativen Messgröße mittels eines zweiten, zum ersten Bewertungsprogramm oder -muster unterschiedlichen Bewertungsprogramms oder -musters wenigstens eine Fahrweisenkenngröße ermittelt wird, die dann mit mittels des zweiten Bewertungsprogramms oder -musters ermittelten Fahrweisenkenngrößen vergleichbar ist.

8. Vorrichtung nach Anspruch 7, **dadurch gekennzeichnet, dass** die Speicherkarte (7) durch eine herkömmliche Fahrerkarte eines digitalen Tachographen (1) oder durch eine separate Speicherkarte gebildet ist.

9. Vorrichtung nach Anspruch 7 oder 8, **dadurch gekennzeichnet, dass** die Umwandlereinrichtung (10) Bestandteil der in den Tachographen (1) integrierten Erfassungs- und Auswerteeinrichtung (2) ist oder als separates Bauteil mit der Erfassungs- und Auswerteeinrichtung (2) gekoppelt und ebenfalls in den Tachographen (1) integriert ist.

## Claims

1. A method for assessing the driving style of a vehicle driver of motor vehicles, in particular commercial vehicles, using a recording and evaluation device (2) which has a recording device, which is used to record at least one measurement variable indicative of the driving style, and a driving style evaluation device which is used to determine at least one driving style characteristic variable, which assesses the driving style and/or the qualification of the respective driver, on the basis of the at least one measurement variable indicative of the driving style, the recording and evaluation device (2) being integrated in a tachograph (1), the driving style being assessed on the basis of a defined assessment program or pattern, **characterized in that** the tachograph (1) is tamperproof and the at least one measurement variable (8) indicative of the driving style is recorded in a tamperproof manner using the tamperproof tachograph (1) and the at least one driving style characteristic variable is determined in a tamperproof manner from the at least one measurement variable (8) indicative of the driving style and/or is stored and is output as a driver qualification notification (7, 9) which assesses and/or qualifies the driver,
**in that** a converter device (10) is provided and is used to determine, on the basis of the at least one driving style characteristic variable determined for a first driver using a first assessment program or pattern, the at least one measurement variable indicative of the driving style on which this at least one driving style characteristic variable is based, and
**in that**, on the basis of this at least one measurement variable indicative of the driving style and determined in this manner, at least one driving style characteristic variable is then determined using a second assessment program or pattern different from the first assessment program or pattern, which driving style characteristic variable can then be compared with driving style characteristic variables determined using the second assessment program or pattern.

2. The method according to Claim 1, **characterized in that** the tachograph (1) has an output device (4), in particular a printer, which output device (4) is used to output the driver qualification notification (9) in the form of proof of driver qualification.

3. The method according to Claim 2, **characterized in that** the tachograph (1) has an output device (6) which is used to store the at least one driving style characteristic variable on a memory card (7) which can be operatively connected to the tachograph (1) and then forms the driver qualification notification.

4. The method according to one of the preceding claims, **characterized in that** the at least one measurement variable (8) indicative of the driving style is supplied to the tachograph (1) in a cryptographically processed manner and this measurement variable (8) is decrypted in the tachograph (1) using a code or key stored there and is stored and evaluated there .

5. The method according to one of the preceding claims, **characterized in that** the at least one driving style characteristic variable is output and/or stored in the form of a scale value which is determined as a scale value which assesses the driving style of the respective driver from an assessment scale having a plurality of scale values.

6. The method according to one of the preceding claims, **characterized in that** the driving style is assessed for a defined road section.

7. An apparatus for assessing the driving style of a vehicle driver of motor vehicles, having a recording and evaluation device (2) which has a recording device for recording at least one measurement variable indicative of the driving style and a driving style evaluation device for determining at least one driving style characteristic variable, which assesses the driving style and/or the qualification of a driver, on the basis of the at least one measurement variable indicative of the driving style, the recording and evaluation device (2) being integrated in a tachograph (1), **characterized in that** the tachograph (1) is tamperproof such that the at least one measurement variable (8) indicative of the driving style can be recorded in a tamperproof manner using the tachograph (1) and the at least one driving style characteristic variable can be determined from the at least one measurement variable (8) indicative of the driving style and/or can be stored,
**in that** the tachograph (1) has an output device (4, 6) which can be used to output a driver qualification notification in the form of proof (9) of driver qualification and/or can be used to store the at least one driving style characteristic variable on a storage medium or memory card (7) which can be operatively connected to the tachograph (1) and forms a driver qualification notification,
**in that** a converter device (10) is provided and is used to determine, on the basis of the at least one driving style characteristic variable determined for a first driver using a first assessment program or pattern, the at least one measurement variable indicative of the driving style on which this at least one driving style characteristic variable is based, and which converter device (10) is then used to determine, on the basis of this at least one measurement variable indicative of the driving style and determined in this manner, at least one driving style characteristic variable using a second assessment program or pattern different from the first assessment program or pattern, which driving style characteristic variable can then be compared with driving style characteristic variables determined using the second assessment program or pattern.

8. The apparatus according to Claim 7, **characterized in that** the memory card (7) is formed by a conventional driver card of a digital tachograph (1) or by a separate memory card.

9. The apparatus according to Claim 7 or 8, **characterized in that** the converter device (10) is part of the recording and evaluation device (2) integrated in the tachograph (1) or is coupled to the recording and evaluation device (2) as a separate component and is likewise integrated in the tachograph (1).

## Revendications

1. Procédé d'évaluation de la conduite d'un conducteur de véhicules automobiles, notamment de véhicules utilitaires, avec un dispositif de collecte et d'interprétation (2), qui possède un dispositif de collecte par l'intermédiaire duquel est collectée au moins une grandeur de mesure indicatrice de la conduite et un dispositif d'interprétation de la conduite par l'intermédiaire duquel est déterminée, en se basant sur l'au moins une grandeur de mesure indicatrice de la conduite, au moins une grandeur caractéristique de conduite qui évalue la conduite et/ou la qualification du conducteur correspondant, le dispositif de collecte et d'interprétation (2) étant intégré dans un tachygraphe (1), l'évaluation de la conduite étant effectuée sur la base d'un programme ou d'un modèle d'évaluation défini, **caractérisé en ce que** le tachygraphe (1) est configuré à l'épreuve des manipulations et l'au moins une grandeur de mesure indicatrice de la conduite (8) est collectée à l'épreuve des manipulations par l'intermédiaire du tachygraphe (1) configuré à l'épreuve des manipulations et l'au moins une grandeur caractéristique de conduite est déterminée et/ou mise en mémoire à l'épreuve des manipulations à partir de l'au moins une grandeur de mesure indicatrice de la conduite (8) et aussi délivrée sous la forme d'un communiqué de qualification du conducteur (7, 9) qui évalue et/ou qualifie le conducteur,
**en ce qu'**il existe un dispositif convertisseur (10) par l'intermédiaire duquel, en se basant sur l'au moins une grandeur caractéristique de conduite déterminée pour un premier conducteur à l'aide d'un premier programme ou modèle d'évaluation, est déterminée l'au moins une grandeur de mesure indicatrice de la conduite sur laquelle se base cette au moins une grandeur caractéristique de conduite, et
**en ce qu'**ensuite, en se basant sur cette au moins une grandeur de mesure indicatrice de la conduite ainsi déterminée, au moins une grandeur caractéristique de conduite est déterminée à l'aide d'un deuxième programme ou modèle d'évaluation, différent du premier programme ou modèle d'évaluation, laquelle peut ensuite être comparée avec des grandeurs caractéristiques de conduite déterminées à l'aide du deuxième programme ou modèle d'évaluation.

2. Procédé selon la revendication 1, **caractérisé en ce que** le tachygraphe (1) possède un dispositif de sortie (4), notamment une imprimante, dispositif de sortie (4) par l'intermédiaire duquel est délivré le communiqué de qualification du conducteur (9) sous la forme d'un certificat de qualification du conducteur.

3. Procédé selon la revendication 2, **caractérisé en ce que** le tachygraphe (1) possède un dispositif de sortie (6) par l'intermédiaire duquel l'au moins une grandeur caractéristique de conduite est mise en mémoire sur une carte à mémoire (7) pouvant être amenée en liaison active avec le tachygraphe (1), laquelle forme ensuite le communiqué de qualification du conducteur.

4. Procédé selon au moins l'une des revendications précédentes, **caractérisé en ce que** l'au moins une grandeur de mesure indicatrice de la conduite (8) est acheminée au tachygraphe (1) après un traitement cryptographique et cette grandeur de mesure (8) est décryptée dans le tachygraphe (1) à l'aide d'un code ou d'une clé qui y est stocké (e) ainsi que mise en mémoire et interprétée dans celui-ci.

5. Procédé selon l'une des revendications précédentes, **caractérisé en ce que** l'au moins une grandeur caractéristique de conduite est délivrée et/ou mise en mémoire sous la forme d'une valeur d'échelle, laquelle est déterminée en tant que valeur d'échelle évaluant la conduite du conducteur correspondant à partir d'une échelle d'évaluation possédant plusieurs valeurs d'échelle.

6. Procédé selon l'une des revendications précédentes, **caractérisé en ce que** l'évaluation de la conduite est effectuée pour une portion de parcours définie.

7. Dispositif pour effectuer une évaluation de la conduite d'un conducteur de véhicules automobiles, avec un dispositif de collecte et d'interprétation (2), qui possède un dispositif de collecte destiné à collecter au moins une grandeur de mesure indicatrice de la conduite et un dispositif d'interprétation de la conduite destiné à déterminer au moins une grandeur caractéristique de conduite qui évalue la conduite et/ou la qualification d'un conducteur en se basant sur l'au moins une grandeur de mesure indicatrice de la conduite, le dispositif de collecte et d'interprétation (2) étant intégré dans un tachygraphe (1), **caractérisé en ce que** le tachygraphe (1) est configuré à l'épreuve des manipulations de telle sorte que l'au moins une grandeur de mesure indicatrice de la conduite (8) peut être collectée à l'épreuve des manipulations par l'intermédiaire du tachygraphe (1) et que l'au moins une grandeur caractéristique de conduite peut être déterminée et/ou mise en mémoire à l'épreuve des manipulations à partir de l'au moins une grandeur de mesure indicatrice de la conduite (8),
**en ce que** le tachygraphe (1) possède un dispositif de sortie (4, 6) par l'intermédiaire duquel un communiqué de qualification du conducteur peut être délivré sous la forme d'un certificat de qualification du conducteur (9) et/ou par l'intermédiaire duquel l'au moins une grandeur caractéristique de conduite peut être mise en mémoire sur un support de mémorisation ou une carte à mémoire (7) formant un communiqué de qualification du conducteur et pouvant être amené(e) en liaison active avec le tachygraphe (1),
**en ce qu'**il existe un dispositif convertisseur (10) par l'intermédiaire duquel, en se basant sur l'au moins une grandeur caractéristique de conduite déterminée pour un premier conducteur à l'aide d'un premier programme ou modèle d'évaluation, est déterminée l'au moins une grandeur de mesure indicatrice de la conduite sur laquelle se base cette au moins une grandeur caractéristique de conduite, et dispositif convertisseur (10) par l'intermédiaire duquel, en se basant ensuite sur cette au moins une grandeur de mesure indicatrice de la conduite ainsi déterminée, au moins une grandeur caractéristique de conduite est déterminée à l'aide d'un deuxième programme ou modèle d'évaluation, différent du premier programme ou modèle d'évaluation, laquelle peut ensuite être comparée avec des grandeurs caractéristiques de conduite déterminées à l'aide du deuxième programme ou modèle d'évaluation.

8. Dispositif selon la revendication 7, **caractérisé en ce que** la carte à mémoire (7) est formée par une carte de conducteur classique d'un tachygraphe (1) numérique ou par une carte à mémoire séparée.

9. Dispositif selon la revendication 7 ou 8, **caractérisé en ce que** le dispositif convertisseur (10) fait partie intégrante du dispositif de collecte et d'interprétation (2) intégré dans le tachygraphe (1) ou est connecté au dispositif de collecte et d'interprétation (2) sous la forme d'un composant séparé et est également intégré dans le tachygraphe (1).
